# FASCICULE DE BREVET EUROPEEN

(11) **EP 0 852 605 B1**
(45) Date de publication et mention de la délivrance du brevet: **15.03.2000**
(21) Numéro de dépôt: 96933580.1
(22) Date de dépôt: 27.09.1996
(51) Int. Cl.: C08L 77/02, C08L 77/00, C08L 77/06, C08L 23/08

(54) **COMPOSITION THERMOPLASTIQUE POUR CONDUITES DE CARBURANT**
THERMOPLASTISCHE HARZZUSSAMENSETZUNG FÜR BRENNSTOFFLEITUNGEN
THERMOPLASTIC COMPOSITION FOR FUEL LINES

(30) Priorité: 29.09.1995 FR 9511681
(43) Date de publication de la demande: 15.07.1998
(73) Titulaire: Rhodia Engineering Plastics Srl, 20020 Ceriano Laghetto (MI) (IT)
(72) Inventeur: GUAITA, Cesare, I-21049 Tradatte (IT); SPERONI, Franco, I-20020 Ceriano Laghetto (IT)
(74) Mandataire: Esson, Jean-Pierre
(86) Numéro de dépôt international: IB9601148
(87) Numéro de publication internationale: WO9712938

(56) Documents cités:
- EP-A- 0 315 451
- EP-A- 0 355 315
- EP-A- 0 355 792
- EP-A- 0 403 109
- EP-A- 0 469 693
- EP-A- 0 588 253

## Description

L'invention concerne une composition thermoplastique présentant des propriétés améliorées pour la réalisation de récipients de carburants tels que fuel, essence, gas-oil, alcool, et plus particulièrement des conduits d'alimentation du réservoir de carburant ou alimentation du moteur en carburant.

Par le terme "carburant" il faut comprendre les différents mélanges d'hydrocarbures utilisés comme carburant dans les moteurs à explosion ou à compression. Ainsi ce terme englobe notamment le fuel, le gas-oil, toutes les catégories d'essence, ainsi que les mélanges d'hydrocarbures et d'alcools, ou analogues.

Il est connu que les compositions comprenant comme matrice polymérique thermoplastique du polyhexaméthylène adipamide (PA 6.6) ou du polycaprolactame (PA 6) ne sont pas convenables pour la réalisation de conduits de carburant.

En effet, ces polymères ne présentent pas de résistance aux solutions salines telles qu'une solution de chlorure de zinc (ZnCl₂). Une telle résistance est requise par les constructeurs d'automobiles et est notamment définie par la norme internationale SAE 844 pour la résistance aux solutions salines des conduits de carburant. Brièvement, ce test consiste à déterminer la résistance du matériau au craquage ou fissurage quand le matériau est immergé dans une solution saline généralement de ZnCl₂ avec application d'une force de flexion. Cette propriété est généralement connue sous le nom de résistance au "stress cracking" ou "test au ZnCl₂". Ainsi, un conduit réalisé en PA 6.6 ou PA 6 immergé dans une solution de ZnCl₂ et mis sous tension mécanique se fissure et même éclate en quelques minutes.

Pour résoudre ce problème, II a été proposé d'utiliser des polyamides obtenus à partir de monomères de nombre d'atomes de carbone plus élevé, à savoir 11 ou 12.

Ces polyamides 11 ou 12 présentent une meilleure résistance au test au ZnCl₂, mais ont une résistance aux chocs limitée à température ambiante, et un coût élevé de fabrication. En outre, ces polymères ont une perméabilité aux hydrocarbures élevée.

Il a également été proposé dans le brevet US 5 256 460 une composition thermoplastique comprenant un mélange d'un copolymère thermoplastique avec une polyoléfine comprenant des groupements fonctionnels greffés. Le copolymère thermoplastique est obtenu par copolymérisation de ε-caprolactame avec des monomères aminoacides ou leurs lactames comprenant au moins 9 atomes de carbone, ou un mélange de monomères hexaméthylène diamine et diacides carboxyliques comprenant au moins 9 atomes de carbone. A titre de copolymère préféré, il est décrit le copolyamide obtenu par copolymérisation d'un mélange de monomère comprenant s-caprolactame, hexaméthylènediamine et un acide dimère comprenant 36 atomes de carbone (PA 6 / 6. 36).

Ce copolymère peut également être utilisé en mélange avec du polyamide 11 ou 12 dans des proportions pondérales de 0,1 à 40 % en poids par rapport à la composition.

Il est également décrit que le mélange peut comprendre du polyamide 6 dans une proportion de 0,1 à 20 % en poids et de préférence de 1 à 7 % en poids par rapport à la composition.

Ces compositions présentent une bonne résistance au "test ZnCl₂". Toutefois, le copolymère 6 / 6. 36 est un composé dont certaines propriétés mécaniques sont plus faibles que celles des polyamides PA 6 ou PA 6.6, par exemple la résistance à l'éclatement.

Pour remédier à ces inconvénients, la Demanderesse propose une composition présentant un degré de résistance au "test ZnCl₂" du même ordre de grandeur que les compositions du brevet US 5 246 460, mais avec des niveaux de propriétés mécaniques plus élevées.

A cet effet, la Demanderesse propose une composition thermoplastique comprenant une matrice en polymère thermoplastique et au moins un composé améliorant la résilience des compositions thermoplastiques caractérisée en ce que la matrice est constituée par un mélange d'au moins un premier copolymère thermoplastique obtenu par copolymérisation de ε-caprolactame avec au moins un des monomères choisis dans le groupe comprenant :
- un aminoacide comprenant au moins 9 atomes de carbone, ou le lactame correspondant
- un mélange d'hexaméthylènediamine avec un diacide comprenant au moins 9 atomes de carbone, le rapport pondéral entre l'ε-caprolactame et le total hexaméthylènediamine et diacide étant compris entre 4 et 9,
et d'au moins un second polymère ou copolymère thermoplastique obtenu par polymérisation de monomères comprenant moins de 9 atomes de carbone. La teneur pondérale du second polymère ou copolymère dans la matrice est comprise entre 40 et 80 % en poids, la teneur pondérale en composé modifiant la résilience étant comprise entre 20 et 50 % de la composition thermoplastique.

Le premier polymère thermoplastique est un copolymère correspondant à celui décrit dans le brevet US 5 256 460 dont le texte est inclus dans la présente demande.

A titre de copolyamide préféré, on peut citer les copolyamides 6 / 6.36 déjà décrits précédemment, ou les copolymères obtenus à partir des monomères s-caprolactame, hexaméthylènediamine et diacide undécanoïque.

Le second polymère thermoplastique est un polymère obtenu à partir de monomères comprenant un nombre d'atomes de carbone inférieur à 9. Ces polymères ont comme caractéristique de ne pas être résistant au "test ZnCl₂", A titre d'exemple de second polymère thermoplastique on peut citer les PA 6.6, PA 6, leurs copolymères et les copolyamides à base PA 6.6 et/ou PA 6 modifiés par l'addition en proportion plus ou moins importantes de monomères comme les acides téréphtalique et isophtalique, la métaxylylène diamine, la 1,4-diaminocyclohexane, le 1,4-dicarboxy-cyclohexane, le 1,4-diamino cyclohexane ou analogues. Ce second polymère thermoplastique peut également comprendre de faible proportion de monomères comprenant plus de 9 atomes de carbone, par exemple, les acides dodécanoïque, azéléïque, sébaccique, l'isophorone diamine, sans pour cela sortir du cadre de l'invention.

Contrairement à l'enseignement du brevet US 5 256 460, ces seconds polymères thermoplastiques sont présents dans la composition de l'invention à une concentration élevée. En effet, le rapport second polymère / premier polymère peut varier entre 1,6 et 4. Au contraire, les exemples du brevet US 5 256 460 illustrent des compositions comprenant un rapport PA 6 / PA 6/6.36 égal à 1 / 15.

Les compositions de l'invention comprenant une concentration élevée en polyamide à chaîne carbonée courte (PA 6, PA 6.6) présentent une résistance au "test ZnCl₂" équivalente aux compositions connues, et des propriétés mécaniques nettement plus élevées.

Selon une autre caractéristique de l'invention, le composé modifiant la résilience de la composition est avantageusement présent à une concentration pondérale comprise entre 25 et 45 % par rapport à la totalité de la composition.

Comme composé modifiant la résilience convenable pour l'invention, on peut citer, à titre d'exemple, les ionomères, les polymères ou copolymères de polyoléfines comprenant des groupes fonctionnels tels que des groupes carboxyliques, esters, anhydrides, glycydiles ou carboxylates comme l'anhydride maléique, les acides méthacryliques et acryliques. Ces groupes fonctionnels sont incorporés dans les polyoléfines par copolymérisation ou par greffage.

De tels composés sont connus dans l'état de la technique et décrits dans de nombreuses publications.

Selon une autre caractéristique de l'invention, ces polymères ou copolymères comprenant des groupements fonctionnels peuvent être associés à d'autres composés modifiant la résilience, mais ne comportant pas de groupements fonctionnels permettant un accrochage avec la matrice thermoplastique. On peut citer à titre d'exemple les polymères et copolymères d'oléfines tels que le polyéthylène, le polypropylène, les copolymères d'éthylène et de propylène, les EPDM, EPR, le polystyrène butadiène bloc ou hydrogéné, les copolymères de polyoléfines avec l'acétate de vinyle.

Toutefois, selon l'invention, le polymère à groupements fonctionnels devra être présent selon une concentration pondérale d'au moins 30 %, tandis que le polymère non fonctionnalisé ne sera présent qu'à une concentration pondérale maximale de 30 %.

Les compositions de l'invention peuvent également comprendre un plastifiant de la matrice polyamide tel que, par exemple, les sulfonamides et plus particulièrement le N-butylbenzènesulfonamide. Ce plastifiant est avantageusement présent avec une concentration pondérale comprise entre 0 et 15 % par rapport à la composition totale.

L'invention a également pour objet les articles obtenus par mise en forme d'une composition selon l'invention par les techniques habituelles de mise en forme telles que, par exemple, le moulage, l'extrusion, l'extrusion-soufflage, ou analogue.

Comme article on peut citer plus particulièrement les réservoirs d'essence, et encore plus avantageusement les conduits d'arrivée de l'essence au moteur ou les conduits d'alimentation des réservoirs.

Ces exemples d'articles ne sont donnés qu'à titre indicatif mais correspondent aux pièces requérant une bonne résistance au carburant, notamment une faible perméabilité, et des propriétés mécaniques et de flexibilité importantes pour pouvoir résister aux contraintes et aux vibrations.

D'autres avantages et détails de l'invention apparaîtront plus clairement au vu des exemples donnés ci-dessous uniquement à titre d'illustration et sans effet limitatif.

Les pourcentages sont exprimés en pourcentage poids par rapport à la composition totale, sauf indication contraire.

### Exemple 1 : Synthèse du copolymère PA 6 / 6.36

La copolymérisation du copolymère formant le premier composant de la matrice thermoplastique est réalisée selon le mode opératoire décrit dans le brevet US 5 256 460 et repris brièvement ci-dessous :

Une solution d'hexaméthylènediamine et d'un acide dimère à 36 atomes de carbone dans le caprolactame est préparée. L'hexaméthylène diamine et l'acide dimère sont présents selon un rapport stoechiométrique, tandis que le rapport pondéral entre l'hexaméthylènediamine et le caprolactame est de 0,033.

Pour réguler et contrôler le poids moléculaire du polymère, un monoacide (acide azéléïque) est ajouté.

La solution est polymérisée sous atmosphère inerte dans un autoclave. La polymérisation est ensuite poursuivie par mise sous pression réduite (100 torr) jusqu'à obtention de la viscosité désirée. La viscosité relative du copolymère, mesurée dans l'acide sulfurique, est généralement comprise entre 2,5 et 3,5; Cette viscosité est indirectement contrôlée et appréciée par la mesure du couple de forces nécessaire pour entraîner l'agitateur dans le réacteur.

### Exemples 2 à 8 et exemples comparatifs A à E

Les compositions de l'invention sont préparées par mélange dans une extrudeuse à double vis par addition des différents composants et mélange à une température comprise entre 233°C et 288°C. Le mélange est extrudé à 266°C sous forme de joncs qui sont ensuite coupés sous forme de granulés.

Les différentes compositions de l'invention sont répertoriées dans le tableau 1 ci-dessous avec leur composition.

Les exemples A à E sont des exemples comparatifs qui sont en dehors de la présente invention. L'exemple A correspond à une composition décrite (exemple 4) dans le brevet US 5 256 460.

La matrice polyamide est constituée par un mélange du copolymère PA 6 / 6-36 obtenu selon l'exemple 1 et de polycaproamide de viscosité relative, mesurée dans l'acide sulfurique, égale à 3,8.

**Tableau I**

| Exemples | A | B | C | D | E | 2 | 3 | 4 | 5 | 5 | 7 | 8 |
|---|---|---|---|---|---|---|---|---|---|---|---|---|
| PA 6/6-36 | 45 | 45 | 62 | 46,5 | 7,2 | 31 | 23 | 18,5 | 12,5 | 30 | 29 | 15,5 |
| PA 6 | 5 | | | 15,5 | 55,8 | 31 | 37 | 43,5 | 49,5 | 30 | 29 | 46,5 |
| PA 12 | 10 | | | | | | | | | | | |
| Plastifiant | 0 | 8 | 8 | 8 | 8 | 8 | 8 | 8 | 8 | 10 | 12 | 8 |
| EP-g-MA | 20 | 47 | 30 | 30 | 30 | 30 | 30 | 30 | 30 | 30 | 30 | 20 |
| EAA | 10 | | | | | | | | | | | |
| lonomère | 10 | | | | | | | | | | | |
| Concentration PA 6 dans matrice (%) | 8 | 0 | 0 | 25 | 90 | 50 | 61,6 | 70,16 | 79,8 | 50 | 50 | 75 |

Le plastifiant est du N-butylbenzène sulfonamide.

EP-g-Ma est un copolymère éthylène / propylène greffé anhydride maléique commercialisé par la société EXXON sous le nom commercial EXXELOR VA 1801.

lonomère est un polymère commercialisé par la société E.I. DU PONT de NEMOURS sous le nom commercial SURLYN 9720.

EAA est un copolymère d'éthylène et d'acide acrylique.

Les compositions ainsi fabriquées sont extrudées dans une extrudeuse monovis sous forme de tuyau ou conduit de diamètre interne égal à 6 mm et d'épaisseur 1 mm. Les propriétés mécaniques et de résistance au "Test ZnCl₂" des différentes compositions sont déterminées sur les conduits extrudés et rassemblées dans le tableau II ci-dessous.

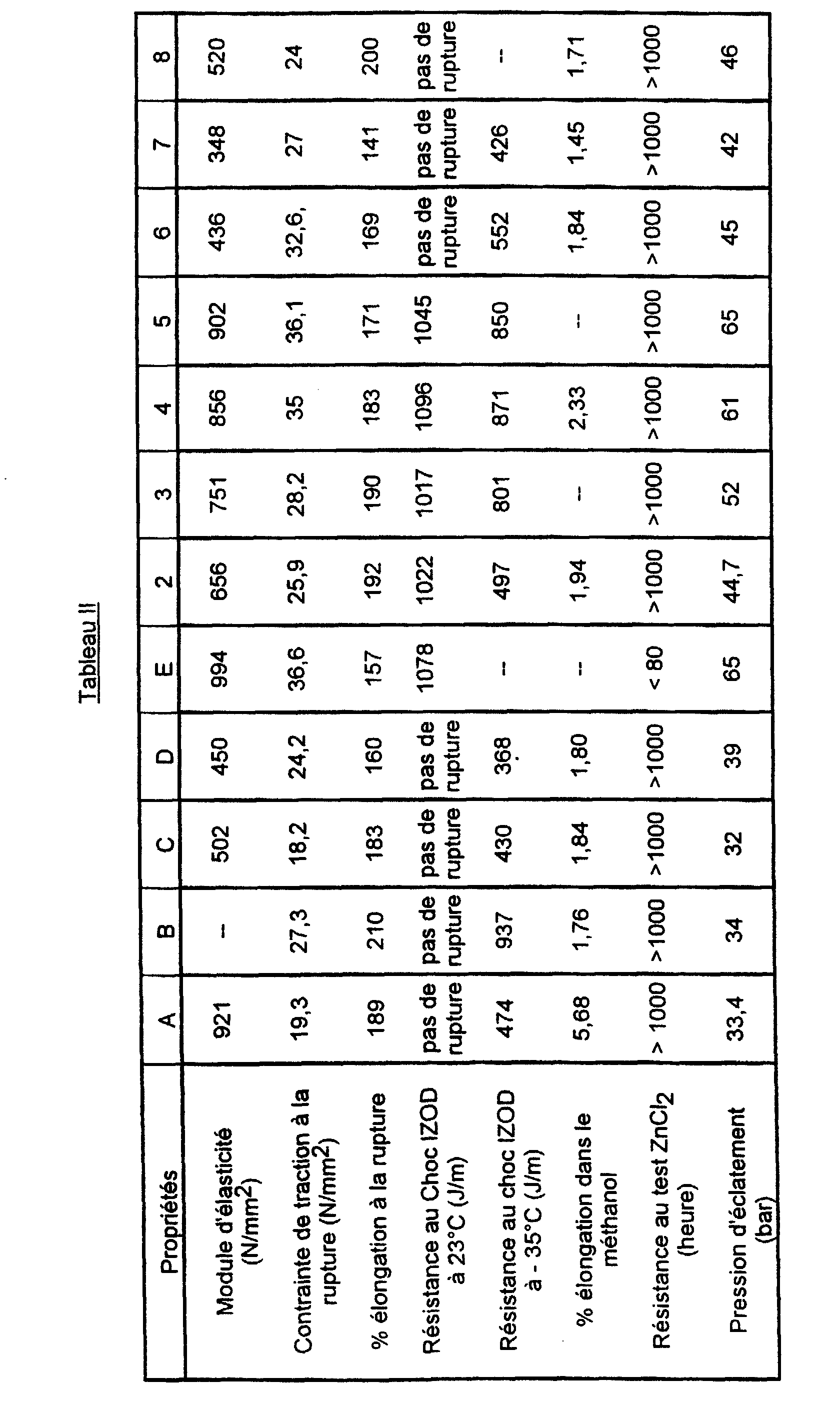

La détermination de la résistance au "Stress Cracking" dans une solution de ZnCl₂ est réalisée selon la procédure décrite dans la norme internationale SAE J 844 émise en juin 1963 et révisée le 12 juin 1990. Ce test consiste à soumettre un tube de diamètre intérieur de 6 mm et de diamètre extérieur de 8 mm, extrudé avec le matériau à tester, à une courbure de rayon déterminé et d'immerger le tube ainsi courbé dans une solution fraîche à 50 % en poids de chlorure de zinc pendant 200 heures à 24°C. Après retrait du tube de la solution, aucune fissure ne doit apparaître sur la surface externe de celui-ci.

La pression d'éclatement est également déterminée selon la procédure décrite dans la norme SAE J 844 citée précédemment, et consiste à déterminer à quelle pression un tube éclate après maintien de la pression pendant une durée de 3 à 15 secondes.

Les résistances aux chocs IZOD sont déterminées sur des éprouvettes selon la méthode définie dans la norme ASTM D-256.

L'élongation dans le méthanol est déterminée sur les tubes extrudés selon le test suivant : des barres rondes métalliques de diamètre externe sensiblement égal au diamètre interne des tubes à tester sont introduites à l'intérieur des morceaux de tubes de longueur au moins égale à 300 mm, pour éviter toute déformation, par exemple flexion ou torsion, des tubes à tester.

L'ensemble est conditionné par maintien pendant 48 heures dans une chambre à une température de 80°C. Ensuite l'ensemble est amené à température ambiante et la barre ronde est extraite. Le tube est ensuite fixé sur un équipement permettant de mettre et maintenir les tubes en communication avec un réservoir contenant du méthanol. Des marques sont réalisées sur le tube et leur position est déterminée. Une quantité déterminée de méthanol est introduite dans les tubes, cette quantité sera maintenue sensiblement constante pendant toute l'opération par addition automatique à partir du réservoir précité. L'ensemble est ensuite chauffé et maintenu à 40°C pendant 72 heures. Après arrêt du chauffage, l'ensemble revient à température ambiante en 2 à 3 heures. La nouvelle position des marques sur le tube est déterminée. Le pourcentage d'allongement dans le méthanol est calculé par comparaison des positions initiales et finales des marques.

La contrainte de traction à la rupture et le pourcentage d'élongation à la rupture sont déterminés par dynamométrie sur des morceaux de tube ayant une longueur de 200 mm. Pour éviter toute déformation des tubes dans les mâchoires du dynamomètre, on insère deux barres rondes métalliques aux extrémités des tubes ; ces barres ayant une longueur équivalente au trait de tube serré dans la mâchoire et un diamètre sensiblement égal au diamètre interne des tubes. Une contrainte de traction est appliquée sur le tube pour obtenir une vitesse de déformation de 50 mm/min. Après rupture, l'allongement du tube est déterminé ainsi que la contrainte de traction.

Les exemples ci-dessus montrent que les compositions avec une matrice thermoplastique contenant de 50 à 79,8 % de PA 6, présentent une bonne résistance à une solution de chlorure de zinc et au méthanol tout en présentant des propriétés mécaniques, notamment une pression d'éclatement plus élevées que les compositions de l'art antérieur.

L'invention concerne les compositions décrites ci-dessus contenant les composants décrits, mais également de telles compositions contenant des additifs tels que agents de nucléation, stabilisants thermiques ou lumières, colorants, pigments, lubrifiants sans pour cela sortir du cadre de celle-ci. Cette liste d'additifs n'a pas de caractère limitatif.

## Revendications

1. Composition thermoplastique comprenant une matrice en polymère thermoplastique et au moins un composé améliorant la résilience des compositions thermoplastiques, caractérisée en ce que la matrice est constituée par un mélange d'au moins un premier copolymère thermoplastique obtenu par copolymérisation de ε-caprolactame avec au moins un des monomères choisis dans le groupe comprenant :
• un aminoacide comprenant au moins 9 atomes de carbone, ou le lactame correspondant
• un mélange d'hexaméthylènediamine avec un diacide comprenant au moins 9 atomes de carbone, le rapport pondéral entre l'ε-caprolactame et le total hexaméthylènediamine et diacide étant compris entre 4 et 9,
et d'au moins un second polymère ou copolymère thermoplastique obtenus par polymérisation de monomères comprenant moins de 9 atomes de carbone, la teneur pondérale du second polymère ou copolymère dans la matrice étant comprise entre 40 et 80 % en poids, la teneur pondérale en composé modifiant la résilience étant comprise entre 20 et 50 % de la composition totale.

2. Composition selon la revendication 1, caractérisée en ce que le second polymère thermoplastique est choisi dans le groupe comprenant les polymères à base de polycaproamide, polyhexaméthylèneadipamide ou de leurs copolyamides.

3. Composition selon la revendication 1 ou 2, caractérisée en ce que la teneur pondérale en composé modifiant la résilience est comprise entre 25 et 45 % de la composition totale.

4. Composition selon l'une des revendications précédentes, caractérisée en ce qu'elle comprend un plastifiant des polyamides.

5. Composition selon la revendication 4, caractérisée en ce que la teneur pondérale en plastifiant est inférieur à 15 % de la composition totale.

6. Composition selon l'une des revendications précédentes, caractérisée en ce que le nombre d'atome de carbone du monomère diacide du premier copolymère est égal à 36.

7. Composition selon l'une des revendications précédentes, caractérisée en ce qu'au moins un des composés modifiant la résilience est choisi dans le groupe comprenant les ionomères, les polymères ou copolymères de polyoléfines comprenant des groupes fonctionnels tels que des groupes carboxyliques, esters, anhydrides, glycydiles ou carboxylates.

8. Composition selon la revendication 7, caractérisée en ce que le groupe fonctionnel est choisi parmi l'anhydride maléique, les acides métacrylique et acrylique.

9. Composition selon la revendication 7 ou 8, caractérisée en ce que la concentration pondérale en polymère comprenant des groupes fonctionnels dans la composition est au moins égale à 30 % en poids de la composition totale.

10. Composition selon la revendication 7, caractérisée en ce qu'elle comprend un composé modifiant la résilience ne comprenant pas de groupements fonctionnels selon une concentration inférieure à 30 % en poids de la composition totale .

11. Composition selon l'une des revendications 7 à 10, caractérisée en ce que le composé modifiant la résilience ne comprenant pas de groupements fonctionnels est choisi dans le groupe comprenant les polymères et copolymères d'oléfines tels que le polyéthylène, le polypropylène, les copolymères d'éthylène et de propylène, les EPDM, EPR, le polystyrène butadiène bloc ou hydrogéné, les copolymères de polyoléfines avec l'acétate de vinyle.

12. Article obtenu par mise en forme d'une composition selon l'une des revendications 1 à 11.

13. Conduit pour carburants liquides tels que fuel, gas-oil, essence, obtenu par mise en forme d'une composition selon l'une des revendications 1 à 11.

## Patentansprüche

1. Thermoplastische Zusammensetzung, die eine Matrix aus thermoplastischem Polymer und wenigstens eine Verbindung, die die Schlagzähigkeit der thermoplastischen Zusammensetzungen verbessert, umfasst, dadurch gekennzeichnet, dass die Matrix aus einem Gemisch von wenigstens einem ersten thermoplastischen Copolymer, das erhalten wird durch Copolymerisation von ε-Caprolactam mit wenigstens einem der Monomere, die aus der Gruppe ausgewählt sind, die umfasst:
• eine Aminosäure mit wenigstens 9 Kohlenstoffatomen oder das entsprechende Lactam
• ein Gemisch von Hexamethylendiamin mit einer Dicarbonsäure mit wenigstens 9 Kohlenstoffatomen, wobei das Gewichtsverhältnis zwischen dem ε-Caprolactam und der Summe aus Hexamethylendiamin und Dicarbonsäure zwischen 4 und 9 liegt,
und aus wenigstens einem zweiten thermoplastischen Polymer oder Copolymer, erhalten durch Polymerisation von Monomeren mit weniger als 9 Kohlenstoffatomen, besteht, wobei der Gewichtsgehalt des zweiten Polymers oder Copolymers in der Matrix zwischen 40 und 80 Gew.-% beträgt, der Gewichtsgehalt an Verbindung, die die Schlagzähigkeit verändert, zwischen 20 und 50% der Gesamtzusammensetzung beträgt.

2. Zusammensetzung gemäß Anspruch 1, dadurch gekennzeichnet, dass das zweite thermoplastische Polymer aus der Gruppe ausgewählt ist, die die Polymere auf der Basis von Polycaproamid, Polyhexamethylenadipamid oder ihren Copolyamiden umfasst.

3. Zusammensetzung gemäß Anspruch 1 oder 2, dadurch gekennzeichnet, dass der Gewichtsgehalt an Verbindung, die die Schlagfestigkeit verändert, zwischen 25 und 45% der Gesamtzusammensetzung beträgt.

4. Zusammensetzung gemäß einem der vorhergehenden Ansprüche, dadurch gekennzeichnet, dass sie einen Weichmacher für Polyamide umfasst.

5. Zusammensetzung gemäß Anspruch 4, dadurch gekennzeichnet, dass der Gewichtsgehalt an Weichmacher kleiner ist als 15% der Gesamtzusammensetzung.

6. Zusammensetzung gemäß einem der vorhergehenden Ansprüche, dadurch gekennzeichnet, dass die Zahl an Kohlenstoffatomen des Dicarbonsäuremonomers des ersten Copolymers gleich 36 ist.

7. Zusammensetzung gemäß einem der vorhergehenden Ansprüche, dadurch gekennzeichnet, dass wenigstens eine der die Schlagzähigkeit verändernden Verbindungen aus der Gruppe ausgewählt ist, die die lonomere, die Polymere oder Copolymere von Polyolefinen umfasst, die funktionelle Gruppen wie Carboxyl-, Ester-, Anhydrid-, Glycidyl- oder Carboxylatgruppen umfassen.

8. Zusammensetzung gemäß Anspruch 7, dadurch gekennzeichnet, dass die funktionelle Gruppe unter Maleinsäureanhydrid, den Methacryl- und Acrylsäuren ausgewählt ist.

9. Zusammensetzung gemäß Anspruch 7 oder 8, dadurch gekennzeichnet, dass die Gewichtskonzentration an funktionelle Gruppen umfassendem Polymer in der Zusammensetzung wenigstens gleich 30 Gew.-% der Gesamtzusammensetzung beträgt.

10. Zusammensetzung gemäß Anspruch 7, dadurch gekennzeichnet, dass sie eine die Schlagzähigkeit verändernde Verbindung, die keine funktionellen Gruppen umfasst, gemäß einer Konzentration kleiner als 30 Gew.-% der Gesamtzusammensetzung umfasst.

11. Zusammensetzung gemäß einem der Ansprüche 7 bis 10, dadurch gekennzeichnet, dass die die Schlagzähigkeit verändernde Verbindung, die keine funktionellen Gruppen umfasst, aus der Gruppe ausgewählt ist, die die Polymere und Copolymere von Olefinen, wie Polyethylen, Polypropylen, die Copolymere von Ethylen und Propylen, die EPDM, EPR, geblocktes oder hydriertes Polystyrol-Butadien, die Copolymere von Polyolefinen mit Vinylacetat, umfasst.

12. Gegenstand, der durch Formen einer Zusammensetzung gemäß einem der Ansprüche 1 bis 11 erhalten wird.

13. Leitung für flüssige Brennstoffe wie Heizöl, Diesel, Benzin, die durch Formen einer Zusammensetzung gemäß einem der Ansprüche 1 bis 11 erhalten wird.

## Claims

1. Thermoplastic composition comprising a matrix made of thermoplastic polymer and at least one compound which improves the resilience of thermoplastic compositions, characterized in that the matrix is composed of a mixture of at least one first thermoplastic copolymer obtained by copolymerization of ε-caprolaccam with at least one of the monomers chosen from the group comprising:
· an amino acid comprising at least 9 carbon atoms or the corresponding lactam
· a mixture of hexamethylenediamine with a diacid comprising at least 9 carbon atoms, the ratio by weight of ε-caprolactam to the hexamethylenediamine and diacid total being between 4 and 9,
and of at least one second thermoplastic polymer or copolymer obtained by polymerization of monomers comprising less than 9 carbon atoms, the content by weight of the second polymer or copolymer in the matrix being between 40 and 80% by weight, the content by weight of resilience-modifying compound being between 20 and 50% of the overall composition.

2. Composition according to claim 1, characterized in that the second thermoplastic polymer is chosen from the group comprising polymers based on polycaproamide, polyhexamethyleneadipamide or their copolyamides.

3. Composition according to claim 1 or 2, characterized in that the content by weight of resilience-modifying compound is between 25 and 45% of the overall composition.

4. Composition according to one of the preceding claims, characterized in that it comprises a plasticizer of polyamides.

5. Composition according to claim 4, characterized in that the content by weight of plasticizer is less than 15% of the overall composition.

6. Composition according to one of the preceding claims, characterized in that the number of carbon atoms in the diacidic monomer of the first copolymer is 36.

7. Composition according to one of the preceding claims, characterized in that at least one of the resilience-modifying compounds is chosen from the group comprising ionomers, polymers or copolymers of olefins comprising functional groups, such as carboxyl, ester, anhydride, glycidyl or carboxylate groups.

8. Composition according to claim 7, characterized in that the functional group is chosen from maleic anhydride, methacrylic acid and acrylic acid.

9. Composition according to claim 7 or 8, characterized in that the concentration by weight of polymer comprising functional groups in the composition is at least 30% by weight of the overall composition.

10. Composition according to claim 7, characterized in that it comprises a resilience-modifying compound not comprising functional groups according to a concentration of less than 30% by weight of the overall composition.

11. Composition according to one of claims 7 to 10, characterized in that the resilience-modifying compound not comprising functional groups is chosen from the group comprising polymers and copolymers of olefins, such as polyethylene, polypropylene, copolymers of ethylene and of propylene, EPDMs, EPR, hydrogenated or block poly(styrene-butadiene) or copolymers of olefins with vinyl acetate.

12. Article obtained by shaping a composition according to one of claims 1 to 11.

13. Line for liquid fuels, such as fuel oil, diesel oil or petrol, obtained by shaping a composition according to one of claims 1 to 11.
